# EUROPEAN PATENT SPECIFICATION

(11) **EP 3 285 421 B1**
(45) Date of publication and mention of the grant of the patent: **29.04.2026**
(21) Application number: 16185038.3
(22) Date of filing: 19.08.2016
(51) Int. Cl.: H04J 14/02, H04B 10/80, H04Q 11/00

(54) **ACCESS DISTRIBUTION POINT AND HYBRID NETWORK ARCHITECTURE**
ZUGANGSVERTEILPUNKT UND HYBRIDE NETZWERKARCHITEKTUR
POINT DE DISTRIBUTION D'ACCÈS ET ARCHITECTURE DE RÉSEAU HYBRIDE

(43) Date of publication of application: 21.02.2018
(73) Proprietor: Swisscom AG, 3050 Bern (CH)
(72) Inventor: BISCHOFF, Jean-Claude, 1774 Montagny-les-Monts (CH)
(74) Representative: P&TS SA (AG, Ltd.)

(56) References cited:
- EP-A1- 2 120 443
- WO-A1-2016/026688
- WO-A1-2016/032466
- US-A1- 2008 310 842
- US-A1- 2014 314 412
- US-B1- 8 670 667
- "Access, Terminals, Transmission and Multiplexing (ATTM); Reverse Power Feed for Remote Nodes", TECHNICAL REPORT, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ATTM TM6, no. V2.1.2, 1 March 2011 (2011-03-01), XP014064492
- "Access, Terminals, Transmission and Multiplexing (ATTM); Broadband Deployment and Energy Management; Part 4: Access Networks; Sub-part 1: Fixed access networks (excluding cable)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ATTM AT2, no. V1.2.1, 1 September 2015 (2015-09-01), XP014265268

## Description

### Field of the invention

The present invention relates to an access distribution point and a hybrid network architecture.

### Description of related art

Modern landline or fixed-line telecommunication networks typically include fiber optical components in the signal path between the network operator's or internet provider's premises, typically referred to as the "central office (CO)", and equipment located at a customer's premises (CPE). In hybrid networks the signal path includes optical fibers and copper-based connections, with the latter typically providing as the local loop the signal path to the CPE.

Even though it is for many reasons desirable to avoid hybrid network architectures and instead provide an all-optical signal path between the CO and the CPE, existing (legacy) installations, such as the copper local loop, and economic constraints often require such a hybrid network architecture. Hybrid network architecture includes generally distribution points or nodes at which an optical signal on the upstream ports of the distribution point is converted into an electric signal and passed on to the downstream ports of the distribution point. The upstream ports of the distribution point are optical connections and the downstream ports of the distribution point are electrical connections. In such a network the distribution point is the terminal of what is typically referred to as the optical fiber feeder or backhaul of the network. Such a setup is known as fiber-to-the-distribution-point or FTTdp or as a fiber-to-the-node or FTTN network. Other commonly found acronyms referred to such a network as fiber-to-the-curb/cabinet or FTTC or FTTB (fiber-to-the-building). In contrast, a network with an all-optical signal path to the customer premises is typically referred to as fiber-to-the-home or FTTH.

Thus, the terminal distribution point of an FTTdp optical network often has to support a plurality of CPEs. The distribution point can thus be regarded as both an electro-optical converter and as a multiplexer. In cases where the network supports data traffic such as asynchronous transfer mode (ATM) or current Internet protocols such as TCP/IP, the distribution point may be configured for example as a digital subscriber line access multiplexer (DSLAM) that connects multiple customer digital subscriber line (DSL) interfaces to the CPEs. In a typical DSL network the DSLAM also serves as a modulator/demodulator to communicate with the corresponding DSL modem/router of the CPE, e.g. using the discrete multitone modulation or DTM protocol.

The above described background is well known in the art and described in many publications.

A distribution point of the fiber optical network requires typically a power supply. In most cases, such a power supply is provided by the network operator or a utility company as a dedicated electrical power line to the node. It can be easily seen that such a dedicated electrical power line adds to the complexity and costs of installation of a node. Therefore various designs have been suggested to harvest the required electrical energy by other means. Some of these designs propose energy harvesting from the optical fiber backhaul, whilst other designs have suggested power supplies from one or more customer's premises. The latter designs are sometimes referred to as reverse powering.

Reverse powering is described in various documents for example in the published United States patent application no. 20080310842, the United States patent no. 7627246, in the published European patent application no. 2472792 A2, in the technical report ETSI TR 102 629 V2.1.2 (2011-03), or in the TI application report SLVA694 (April 2015). A disadvantage of reverse powering is that the CPEs provide the electrical power of the distribution point without considering their proportional usage of the distribution point. This could be considered unfair for CPEs which do not use much the service of the distribution point.

US8670667 discloses a distribution point with a passive optical multiplexer and a plurality of optical units which convert the optical signal from the multiplexer directed to a customer premises into an electrical signal. The distribution point comprises an AMC manager for functions common to several optical units. The AMC manager is configured to draw an equal amount of power from each customer premises.

WO2016/032466 discloses systems, methods and apparatuses for implementing the virtualization of access node functions as well as the systems, methods, and apparatus for implementing Persistent Management Agent (PMA) function for the control and coordination of DPU and DSLAM components.

The publication "Access, Terminals, Transmission and Multiplexing (ATTM), Broadband Deployment and Energy Management; Part 4: Access Networks; Sub-part 1: Fixed access networks (excluding cable)"dated 1 September 2015 discloses a contribution to standardization process by establishing an initial basis for work on ICT networks and transmission engineering.

It should be understood that the above referenced documents show only some examples of known designs and others may be found in the published literature.

### Brief summary of the invention

It is an object to provide a distribution point which does not need an additional electric power connection, which is easy to implement and considers the fairness with respect to the CPEs.

This object is solved by the network architecture according to claim 1.

In particular, the combination of the optical multiplexer and the plurality of independent modules for converting the optical data of a certain wavelength to electrical data for CPE(s) connected to the respective module and vice versa allows to manage the power supply of the modules independently from each other. This allows to provide the electrical power to operate each module from the CPE(s) connected to this module. Having network function virtualisation implemented in the central office equipment or in equipment linked to the CO equipment relieves or alleviates the requirements for the distribution point to perform such functions and hence may reduce the power consumption involved with performing them. In addition, the solution reduces the complexity compared to existing solutions.

The dependent claims refer to advantageous embodiments.

These and other advantages, aspects and novel features of the present invention, as well as details of an illustrated embodiment thereof, will be more fully understood from the following description and drawings.

### Brief Description of the Drawings

The invention will be better understood with the aid of the description of an embodiment given by way of example and illustrated by the figures, in which:
Fig. 1 illustrates a general layout of a hybrid telecommunication network with an optical fiber feeder and several CPEs connected to the network via a copper local loop;
Fig. 2A shows a schematic diagram of a distribution point in accordance with an example of the invention;
Fig. 2B illustrates an exemplary distribution point in further details;
Fig. 3 shows further details of an exemplary central office (CO) equipment; and
Fig. 4 illustrates the use of wavelengths seeding for an example of the present invention.

### Detailed Description

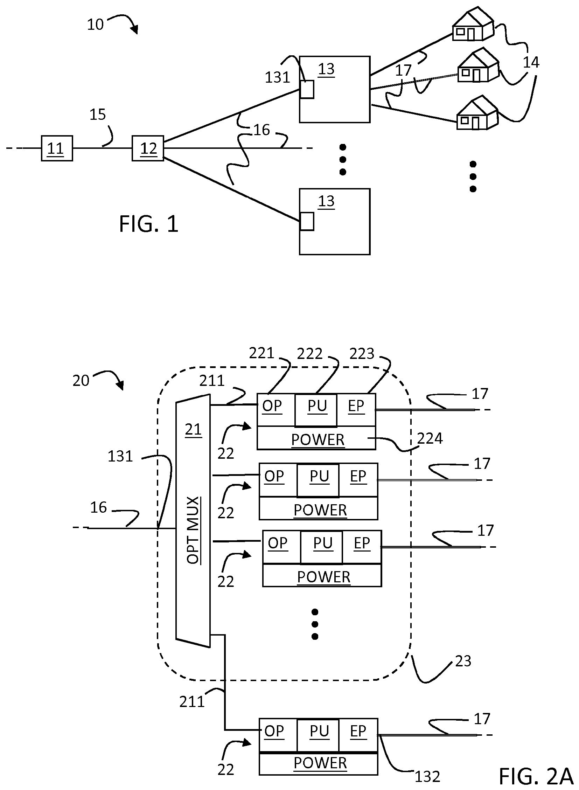

Figure 1 shows a schematic depiction of a part of an FTTC network 10. The part of the network 10 as shown comprises core network node 11, an optical fiber connection 15, an optical line terminal 12 (OLT), several point-to-point optical fiber connections 16, a plurality of distribution points 13, a plurality of copper transmission lines 17 and a plurality of customer premises equipment (CPEs) 14.

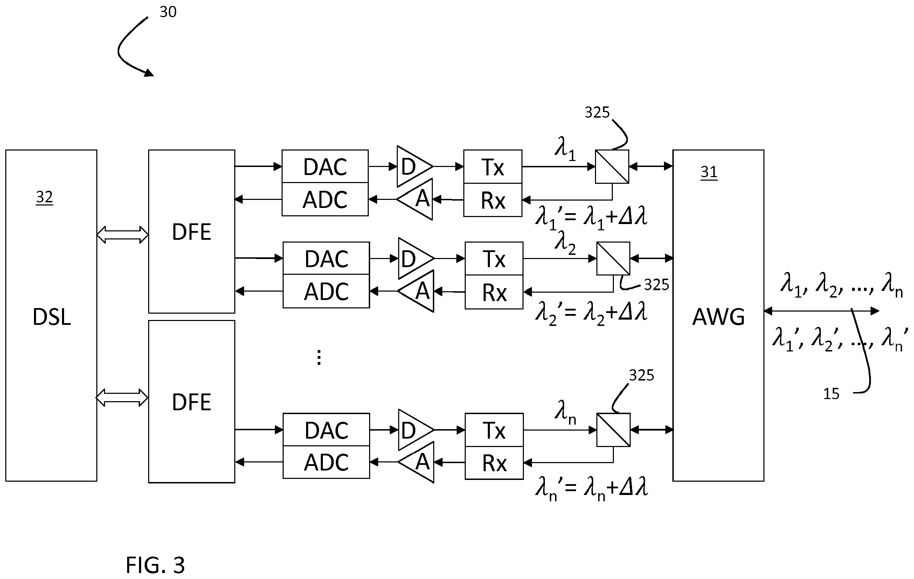

The core network node 11 may typically be a high-speed (optical) switch or router. The core network node 11 provides the central office equipment described in more detail below in relation with the example shown in Fig. 3.

The optical line terminal 12 (OLT) may typically be a high-speed (optical) switch or router. The core network node 11 is connected to the (optional) OLT 12 by an optical fibre cable 15. Data optically received from the core network node 11 are transmitted from the OLT 12 to the connected distribution points 13. If there is more than one distribution point 13 connected to the OLT 12, the transmitted data are demultiplexed in the OLT 12 such that each of the distribution points 13 has a point-to-point optical fibre connection 16 to the OLT 12.

Each CPE 14 may include suitable logic, circuitry and/or code to enable the processing of electrical data signal for communication use between a domestic or commercial router or modem and a distribution point 13. The CPE 14 may further be enabled to suitably process signals for use in a home/office network, for example for use on Ethernet or also Wireless-LAN reception/transmission. A CPE 14 may receive and transmit electrical data signals from/to a distribution point 13 via a copper transmission line 17. The data signals may comply with any suitable transmission technology standard, for example ADSL (Asymmetric Data Subscriber Line e.g. ANSI T1.413 etc.), ADSL Lite, ADSL2, or VDSL (Very-high-bit-rate digital subscriber line e.g. ITU G.993.1 etc.).

Each distribution point 13 is an electro-optical converter and multiplexer. It communicates optically with the network side 11, 12 over the optical fibres 15 and 16 and communicates electrically with the CPEs 14 connected over the electrical wires 17 with the distribution point 13. In a downstream direction, the distribution point 13 receives from the network side 11, 12 optically data for a plurality of CPEs connected to the distribution point 13. The distribution point 13 demultiplexes the received optical data signals into a plurality of optical signals associated each to one CPE 14. Each optical signal associated to a CPE 14 has a different wavelength. The distribution point 13 converts the optical data signals associated to different CPEs 14 into respective electrical signals which are transmitted to the respective CPEs 14. In an upstream direction, the distribution point 13 receives from the plurality of connected CPEs 14 electrically data signals over respective electric wires 17. The distribution point 13 converts the electrical data signals of each CPE into optical data signals of the respective CPEs and multiplexes the optical data signals of the connected CPEs 14 to a common optical data signal for transmitting the data from the CPEs 14 to the network side 11, 12.

Each distribution point 13 may further include an optical I/O port or line card 131 for receiving and transmitting optical data from and to the OLT 12 and/or the core network node 11. Each distribution point 13 may further comprise DSLAM (Digital Subscriber Line Access Multiplexer) functionality which controls the downstream data traffic from the OLT 12 such that it is routed to the appropriate copper transmission lines 17 which connect the distribution point 13 to one or more CPEs 14. The DSLAM also demodulates the DMT signals received over the copper transmission lines 17 from each of the CPEs and combines or multiplexes the demodulated signals such that it can be transmitted over the optical backhaul fibre cable 16 to the OLT 12.

For the sake of clarity, only one distribution point 13 is shown being connected to (three) CPEs 14. It will be understood that one OLT 12 is capable of supporting more distribution points 13 and that each distribution point 13 is capable of supporting more CPEs 14, as will be described below when referring to an example of the invention. It will be further understood that the distribution point 13 is used as an example representative of the distribution points at which (a) an optical signal is converted into an electrical signal and vice versa and (b) one or more wired telecommunications connections are serviced for downstream and upstream signal traffic. The location of such a distribution point 13 may vary for example from cabinets on the roadside, or hidden within manholes to locations within a building, e.g., inside an apartment block or an office building. As the copper wires leading to the CPEs 14 are known as the local loop, the distribution point 13 may be a communication node between the local loop and the rest of the network.

A schematic diagram of an example of a distribution point or copper access node 20 is shown in Fig. 2A. This distribution point 20 is an example for the distribution point 13 shown in Fig. 1. Fig. 2A shows a fiber optic cable 16, an optical multiplexer 21 (OPTMUX), a plurality of internal optical paths 211, a plurality of electro-optical modules 22, a plurality of copper wired connections 17 and a housing 23.

The optical multiplexer OPTMUX 21 is configured in a first (downstream) direction to split an optical signal from the network side into a plurality of optical signals with different wavelengths (demultiplexing) and/or in a second direction (upstream) to combine a plurality of optical signals from the connected CPEs with different wavelengths to a common optical signal (multiplexing). The optical multiplexer 21 is connected via optical signal paths 211 within the distribution point 20 to a plurality of electro-optical modules 22. Preferably, each CPE 14 is associated and/or connected to one module 22. Obviously, more than one CPE 14 can be associated and/or connected to one module 22. In some embodiments, it is also possible to connect one CPE 14 with more than one module 22, for example if the CPE 14 wants to receive more data than transmittable by one module 22. In one embodiment, the optical multiplexer OPTMUX 21 may be a passive optical multiplexer so that the optical multiplexer 21 may not need a separate power supply. In one embodiment, the optical multiplexer is configured for dense wavelength division multiplexing (DWDM) with a channel spacing equal or smaller than 100 GHz (Gigahertz). The internal optical paths 211 may be optical fiber connections or light beams. Following the use of numerals as in the general network design of Fig. 1, the optical fiber 16 connects the distribution point 20 at its optical port 131 with the rest of the telecommunication network, e.g. with an OLT 12 as in Fig. 1 above. The fiber 16 is connected to the optical multiplexer OPTMUX 21.

Each electro-optical module 22 is configured to convert the optical signal received from the optical multiplexer 21 into one or more electrical signals sent to one or more connected CPE(s) 14 and/or to convert the electrical signal(s) received from the one or more connected CPE(s) 14 into an optical signal transmitted to the optical multiplexer 21. Preferably, the modules 22 work on different wavelengths so that optical signals received and/or transmitted at each module 22 are different.

In one embodiment, each module 22 comprises an optical port or front end (OP) 221, a processing unit (PU) 222, an electrical port or front end (EP) 223 and a power unit 224 (POWER). The modules 22 may be designed essentially identical to each other and comprise preferably a configurator (not shown) for configuring the module to a certain selected wavelength.

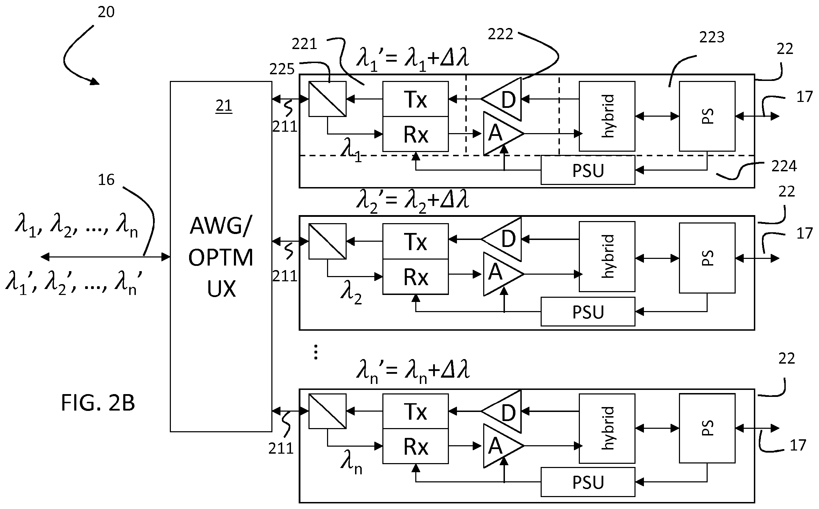

The optical port or front end OP 221 may include an electro-optical converter for converting the optical signal from the optical multiplexer 21 for the CPE(s) 14 connected to the module 22 in an electrical signal for the CPE(s) 14 connected to the module 22 and/or for converting an electrical signal from the CPE(s) 14 connected to the module 22 to an optical signal (associated to the CPE(s) 14 connected to the module 22) for transmission to the optical multiplexer 21. An example of such an optical converter is described in more detail in Fig. 2B. Preferably, the optical port 221 is analogous and may not need a digital conversion.

The processing unit 222 (PU) is configured for eventually necessary processing of the received optical signal converted in the electrical signal and/or for eventually necessary processing of the received electrical signals from the CPEs 14 connected to the module before converting them into the optical signal. The PU 222 may include amplifiers for optical receivers and drivers for optical sources. Preferably, the processing unit 222 is analogous and may not need a digital conversion.

The electrical port or front end 223 is configured to be connected over an electric wire 17 to one or more CPEs 14. Preferably, the electric wire is a twisted pair or copper connection, i.e. the local loop from one of the CPEs (as shown in Fig. 1).The electrical port or front end (EP) 223 may include an electrical connector and eventually further means for processing electrical signals.
The power unit 224 is configured for supplying the electrical power to operate the module 22 to which the power unit 224 belongs. In particular, the power unit 224 is configured to generate sufficient energy so as to independently power the module 22 for the purpose of signal transmission between the CPE(s) 14 connected to it and the rest of the network, i.e. to the fiber 16. In other words, the modules 22 may be with respect to power supply autonomous from each other and also from the rest of the distribution point 20. It is particularly advantageous to provide the electrical power to each module 22 through the local loop itself, i.e., using the signal carrying wires 17, instead of a dedicated power line. The electrical energy can be supplied from the CPE using equipment adapted accordingly, such as from a dedicated power injector placed between the CPE and the DSL outlet (U_{R} in the technical report ETSI TR 102 629 V2.1.2 (2011-03) cited above).

It should be noted that the distribution point 20 as described in Fig. 2A may be configured either as a cabinet or access node with the modules 22 and the optical multiplexer 21 being mounted onto a common structure or housing such as a common rack structure in a common housing 23. As also indicated in Fig. 2A the distribution point 20 may be configured as a distributed architecture wherein the parts of the distribution point do not share a common mounting structure or housing and are connected by the optical path 211 but essentially performing the same function within the telecommunication network.

As each module 22 may be designed to be powered autonomously of the other modules with the required electrical power provide over the local loop wires 17 and the (optical) remainder of the distribution point 20 being passive, the distribution point 20 may be operated without a dedicated electrical power line. This amounts to a significant advantage over existing distribution points. First the installation is simplified and secondly the problem of ensuring fairness between the connected CPE is inherently solved as each CPE may be configured to supply the energy for essentially only the module it is connected to.

An exemplary embodiment of a distribution point 20 is shown in greater detail in Fig. 2B. In FIG. 2B, there is shown a fiber optic cable 16, an optical multiplexer 21 (AWG/OPTMUX), a plurality of internal optical paths 211, a plurality of autonomously powered electro-optical modules 22, a plurality of copper wired connections 17 and a housing 23. The modules 22 may be essentially identical and each module 22 may include an optical port or front end 221, a processing unit 222, and an electrical port or front end 223. Further included in an electro-optical module 22 is a power unit 224.

Each optical front end 221 may include a beamsplitter 225, an optical receiver Rx and optical transmitter Tx. Each processing unit 222 may include a read-out circuit and an amplifier A for the optical receiver Rx and driver D for the optical transmitter Tx. The electrical port or front end 223 may include a power splitter PS which may work in tandem with a corresponding power injector in the CPE (not shown). The electrical port 223 may further include a hybrid circuit (hybrid). The power unit may include a power supply unit PSU for the electrical components of the module 22 and optionally a power storage (not shown). The optical and electrical signals paths inside the module are indicated by arrows. The optical paths are further indexed by a wavelength λ or λ+ Δλ for the downstream and upstream signal paths, respectively.

In the example shown the optical multiplexer 21 may be built from a cyclic dense WDM (DWDM) such as array waveguide grating (AWG). According to its cyclic nature signals of a wavelength λ are de/multiplexed into the same channel as signals of a wavelength λ+ Δλ where Δλ is often referred to as the free spectral range (FSR) of the WDM. The number of channels of the WDM may determine the maximal number of autonomously powered modules 22 which can be connected to the distribution point 20 and hence the number of CPEs which can be supported by it. Given the autonomously powered nature of the modules 22, there may be no further restrictions necessary, e.g. power supply limitations, on the number of modules which can be mounted onto or connected to the distribution point 20. Using DWDM as currently available and operating for example in the C-Band (1530nm -1560nm) 40 or more, 80 or more or even 240 or more optical channels and hence modules 22 and separate CPEs may be supported by such a distribution point 20. For higher numbers of CPEs cascaded arrangements of optical multiplexers may be required.

The optical receiver Rx may include a positive intrinsic negative (PIN) diode or an avalanche photo diode (APD) detector, or a more complex receiver depending on signal modulation. The optical transmitter Tx may include a laser diode, a tunable laser, an optical cavity or Fabry-Perot laser with wavelength seeding, or a reflective semiconductor optical amplifier (RSOA).

The hybrid circuit (hybrid) adapts the signal for transmission over a copper pair. It may comprise a switch to support TDD multiplexing. The power splitter PS is connected to the power supply unit (PSU) 224 which may further include power transforming and/or power storage elements. The power supply unit (PSU) 224 may in turn be connected to elements of the processing unit 222, such as the readout circuits, drivers and amplifiers as described above. Each of the modules 22 shown are essentially identical operating however each on a different wavelength in accordance with the wavelength range and channel spacing of the AWG multiplexer 21.

In operation with regards to upstream signal transmission, an electrical data signal overlaying or interleaved with an electrical power transmission or signal is transmitted from the CPE via the wires 17 to the connected module 22. The electrical data signal overlaying or interleaved with the electrical power transmission enters the connected module 22 on the electrical port side 223. At the power splitter PS the electrical power transmission and the electrical data signal are separated with the electrical power signal feeding into the power supply unit PSU 224. The pure electrical data signal is transformed in the hybrid circuit and then used as driving signal for the transmitter Tx. After conversion into an optical signal the signal is passed through the beamsplitter 225 to the optical multiplexer 21. The optical multiplexer 21 combines the signals of the modules 22 mounted onto or connected to the distribution point 20 and transfers the combined signals to the fiber 16 and thus further upstream into the rest of the telecommunication network using dense wavelength division multiplexing.

Regarding downstream signal transmission, a combined signal enters the distribution point 20 through the fiber 16. The optical multiplexer 21 demultiplexes the signal stream according to wavelength, wherein e.g. each wavelength is associated to a corresponding module 22. Thus, the data transmitted with different wavelengths are received at different modules 22. in each module 22, the signal is directed by the beamsplitter 225 at the optical port or front end 221 of a module 22 to the optical receiver Rx and converted into an electrical signal, which passes through the hybrid circuit and leaves the distribution point 20 through the electrical port 223. The wired connection carries the electrical downstream signal to the CPEs connected to the module 22.

The downstream signals may be carried on a carrier wavelength of λi with i= 1, 2, 3, ..., n denoting the channel number. Using the cycling nature of the WDM, the upstream signals may be carried on a carrier wavelength of λi+ Δλ where Δλ is often referred to as the free spectral range (FSR) of the WDM. In a cycling WDM, this may ensure the multiplexing and demultiplexing of the signal stream into the correct channel associated with the CPE. A CPE (i) may hence be linked to the network receiving signals on a carrier wavelength λi and transmitting signals on a carrier wavelength λi+ Δλ. While higher orders (or higher multiples of Δλ) may be used to the same effect, the lowest order is often the most practical. Using for example the wavelength λi to carry the downstream optical signal traffic and the wavelength λi+ Δλ to carry the upstream optical signal traffic or vice versa a continuous full-duplex connection may be established between the CPE and the CO.

An exemplary embodiment of the associated parts of the upstream or central office equipment 30 on the side of the network operator is illustrated in Fig. 3, e.g. the core network node 11 or the optical line terminal 12 shown in Fig. 1. In FIG. 3 there is shown a fiber optic (backbone) cable 15, an optical multiplexer 31 (AWG), a plurality of optical beamsplitters 325, a plurality of electro-optical transmitters Tx and electro-optical receivers Rx, a plurality of driver units D for the transmitter Tx and a plurality of read-out circuits and amplifiers. The central office equipment 30 may further include digital-to-analog converters (DAC) and analog-to-digital converters (ADC), digital frontends (DFE) and a further processing unit 32 (DSL). The optical and electrical signals paths inside the module are indicated by arrows. The optical paths are further indexed by a wavelength λ or λ' = λ+ Δλ for the downstream and upstream signal paths, respectively.

Elements and components denoted alike to elements and components described with reference to FIGs. 1 or 2 may have similar functions and implementations as described above. The DAC and ADC are well known in the art. The DFE and DSL may typically include digital signal processors and/or line drivers implemented as hardware and/or as programmable devices.

As shown, the combined upstream signal traffic from the CPEs arrives from the optical fiber 15 and is directed to a WDM device 31, e.g. an AWG, which may operate essentially as the WDM 21 described above referring to Figs. 2A and 2B. The WDM 31 is connected to a series of beamsplitters 325 corresponding to different wave lengths and directs the signals of different wavelengths to different corresponding beamsplitters 325. The upstream signals of each wavelength are directed to an optical receiver Rx of the corresponding wavelength. The optical receivers Rx are connected to signal processing devices such as amplifiers and an electrical analog/digital converter (ADC) as shown. The output of the ADC enters a digital frontend DFE which connects to a further processing unit DSL 32 which may include the capability to provide network function virtualization (NFV). The processing unit DSL 32 performs in particular a modulation and demodulation of signals in a format which can in turn be modulated and demodulated at the CPE. For DSL-type signal transmission the format may be determined for example by a DMT protocol. In addition the processing unit 32 may provide the necessary encoding (QAM, PSK), and/or error correction and/or even far end noise cancellation such as vectoring processing (VP) for far end crosstalk suppression , as may be required for some digital subscriber line type services (xDSL, g.fast).

The downstream signal path includes again signal processing devices, which may include an electrical digital analogue converter (DAC) and drivers D as shown. The signal processing devices control, respectively, an optical transmitter Tx which has an optical path to the beamsplitter 325. The optical transmitter Tx transforms the received electrical signal from the driver D into an optical signal (containing the substantially same data). The optical transmitters Tx differ among each other by using different wavelengths for transmitting the received electrical data/signals. Different wavelength or different transmitters Tx are associated to different CPEs. From the beamsplitter 325 the downstream signal path may enter the WDM to be combined to a multiplexed downstream signal path containing some or all optical signals with different wavelengths of the plurality of optical transmitters Tx.

It should be noted that having NFV and particularly functions of a DSLAM implemented in the central office equipment 30 or in equipment linked to the CO equipment 30 such as cloud processing equipment (not shown) may relieve or alleviate the requirements for the distribution point 20 as shown in Figs. 2 to perform such functions and hence may reduce the power consumption involved with performing them. Hardware and/or software solutions for NFV and VP are commercially available.

The CO equipment 30 is thus used to format or modulate the signals into a format that can be processed after being (re-)converted into electrical signals directly by the modem or router of the CPE. In other words, the signals transferred on the optical fiber 15 are optical representations of the electrical signals readable by the modem or router of the CPE. The distribution point 20 may be solely an electro-optical converter without the capability to re-format the electrical signals passing through it from one transmission protocol or transmission format into another. In particular, it is preferred that the distribution point works i.e. without a digital processing of the transmitted data.

The light sources generating the up- and/or downstream optical signals to the wavelength of the appropriate channel carrier may be tuneable. It should be noted that the tuning of the light sources may be achieved in a variety of possible ways. For example, the wavelength may be predetermined and each light source in the transmitters Tx, in particular the light sources in the transmitters Tx of the modules 22, may be fixed to its appropriate wavelength. In another example, the transmitters Tx in the modules 22 and/or in the CO equipment of Fig. 3 may include tuneable light sources. The tuneable light sources may be remotely tuned by an operator or service engineer at the time of installation of the respective equipment or whenever necessary. That means that the modules 22 can be substantially the same with the possibility to configure each module to a different wavelength. Consequently, the service engineer can decide flexibly on the side which is an advantageous wavelength for a certain CPE.

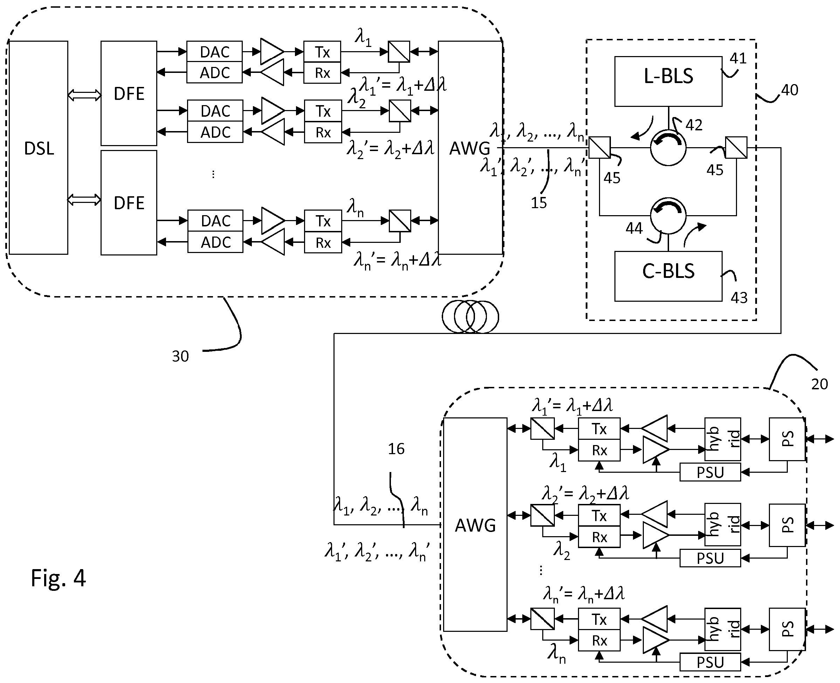

The example of Fig. 4 illustrates another suitable process for tuning the light sources in the transmitters Tx in the modules 22 of the distribution point 20 of Figs. 2 and/or in the CO equipment 30 of Fig. 3. Fig. 4 shows a distribution point 20 as described in detail when referring to FIG. 2B above and central office equipment as described in details when referring to FIG. 3 above. Further shown is a light seeding unit 40. The light seeding unit may include an L-band broadband light source (BLS) 41 and an L-band optical circulator 42 and a C-band broadband light source (C-BLS) 43 and C-band optical circulator 44 and beamsplitters 45.

The process is known as such and often referred to as "wavelength seeding". As shown in FIG. 4 there is a wavelength seeding device 40 in the optical signal path between the CO equipment and the distribution point. The wavelength seeding device 40 may include one or more light sources L-BLS, C-BLS configured to emit light over a spectral range covering the spectral range of the optical multiplexers AWG 21, 31 as employed in the distribution point 20 and/or in the CO equipment 3. Additional parts of the wavelength seeding device 40 may include components such as optical circulators 42, 44 to inject light generated by the light sources into the upstream and/or downstream direction of the network.

The wavelength of the transmitters Tx is controlled by injection of a "seed" signal into the transmitter which may be of a wavelength-locking type (e.g., a wavelength-locked Fabry-Perot laser or reflective semiconductor optical amplifier). The seed signal injected into the transmitter comes from the broadband light demultiplexed through the multiplexers in the system as described or from a distributed feedback (DFB) laser array (not shown).

While various embodiments of the present invention have been described above, it should be understood that they have been presented by way of example only, and not of limitation. Likewise, the various diagrams may depict an example structure or other configuration for the invention, which is done to aid in understanding features and functionality that can be included in the invention. Further, it should be understood that the various features, aspects and functionality described in one or more of the individual embodiments are not limited in their applicability to the particular embodiment with which they are described, but instead can be applied, alone or in various combinations, to one or more of the other embodiments of the invention.

## Claims

1. Network architecture for a digital subscriber line type service (DSL) between a customer premises equipment (14) and a central office equipment (30), the network architecture comprising a central office equipment (30) and a distribution point (20), wherein the distribution point (20) comprises
an optical part (21) with an optical port (131) for connecting to the upstream network via an optical fiber (16) and with a wavelength division multiplexer (21); and
a plurality of electro-optical modules (22), wherein each module (22) is connected with an optical signal port (221) to a different optical channel of the wavelength division multiplexer (21) and is configured to be connected with an electrical signal port to a wired signal connection (17) to a customer premises equipment (14), wherein each module (22) further comprises an optical receiver (Rx) and an optical transmitter (Tx) and an electrical power supply unit (224) configured to power the module (22) including the electric power supply unit (224) by electrical power received from the customer premises equipment (14, 30) connected to the module (22) through the wired signal connection (17)
**characterized in that**
the central office equipment (30) or an equipment linked to the central office equipment (30) includes a processing unit (32) to perform network function virtualization selected from a group consisting of modulation and demodulation of electrical signals into a format directly compatible with the customer premises equipment (14), crosstalk suppression or vectorization, and error encoding, and wherein each module (22) is configured such that under normal operating condition the electrical power transmitted from the customer premises equipment (14) through the wired signal connection (17) is sufficient to operate the module (22) connected to the customer premises equipment (14).

2. Network architecture according to claim 1, wherein the distribution point (20) works without a digital processing of the transmitted data.

3. Network architecture according to claim 1 or 2, wherein the network function virtualization is such that signals transferred from the central office equipment (30) to the distribution point (10) are optical representations of the electrical signals readable by the customer premises equipment (14).

4. Network architecture according to one of claims 1 to 3, wherein the central office equipment (30) is configured to format or modulate signals into a format that can be processed after being (re-)converted into electrical signals directly by the modem or router of the customer premises equipment (14).

5. Network architecture according to one of claims 1 to 4, wherein the wavelength division multiplexer (21) is a passive optical multiplexer.

6. Network architecture according to one of claims 1 to 5, wherein the distribution point (20) is adapted to operate independently of a dedicated electrical power connection to an electrical power grid.

7. Network architecture according to one of claims 1 to 6, wherein each module (22) is free of connections designed to transfer electrical power to the optical part (21) and/or another module (22) to provide it or them with electrical power for its or their operation.

8. Network architecture according to one of claims 1 to 7, wherein the wavelength division multiplexer is a dense wavelength division multiplexer with a channel separation of 100 GHz or less.

9. Network architecture according to one of claims 1 to 8, wherein the WDM is a cyclic dense wavelength division multiplexer, wherein preferably the optical transmitter (Tx) in each module (22) is adapted to transmit on a carrier wavelength of λi +/- nΔλ with λi being the carrier wavelength of the optical channel of the module (22) and nΔλ being a multiple of the free spectral range of the cyclic wavelength division multiplexer.

10. Network architecture according to one of claims 1 to 8, wherein the distribution point is configured as an optical de-/multiplexer and as opto-electrical converter without additional modulator or encoder such that a downstream electrical signal received in an optical and multiplexed form at the optical port (131) is, after demultiplexing and opto-electrical conversion within the distribution point (20), modulated and/or encoded in essentially the same format as the downstream electrical signal transmitted at the electrical port to the customer premises equipment (14), wherein the format is preferably a DSL format.

11. Network architecture according to one of claims 1 to10, wherein the distribution point further comprises optical transmitters (Tx) capable of wavelength locking through a wavelength seeding.

12. Network architecture according to one of claims 1 to 11, wherein the distribution point is configured for full-duplex digital subscriber line (DSL) signal transmissions.

13. Network architecture according to one of claims 1 to 12, wherein the modules (22) are designed identical, wherein each module (22) comprise a configurator for selecting an operating wavelength or frequency of the module, wherein the modules (22) are configured such to have different wavelengths.

14. Network architecture according to one of claims 1 to 13, further including (at least temporally) a wavelength seeding device (40) in the optical path from the central office equipment (30) to the distribution point (20).

## Patentansprüche

1. Netzwerkarchitektur für einen digitalen Teilnehmerleitungsdienst (DSL) zwischen einem Kundenstandort-Gerät (14) und einem Zentralstelleneinrichtung (30), wobei die Netzwerkarchitektur eine Zentralstelleneinrichtung (30) und einen Verteilerpunkt (20) umfasst, wobei der Verteilerpunkt (20) Folgendes umfasst:
einen optischen Teil (21) mit einem optischen Port (131) zum Anschluss an das Upstream-Netzwerk über eine optische Faser (16) und mit einem Wellenlängenmultiplexer (21); und
eine Vielzahl von elektro-optischen Modulen (22), wobei jedes Modul (22) mit einem optischen Signalport (221) mit einem anderen optischen Kanal des Wellenlängenmultiplexers (21) verbunden ist und so konfiguriert ist, dass es mit einem elektrischen Signalport mit einer verdrahteten Signalverbindung (17) zu einem Kundenstandort-Gerät (14) verbunden werden kann, wobei jedes Modul (22) ferner einen optischen Empfänger (Rx) und einen optischen Sender (Tx) und eine elektrische Stromversorgungseinheit (224) umfasst, die so konfiguriert ist, dass sie das Modul (22) einschließlich der elektrischen Stromversorgungseinheit (224) mit elektrischem Strom versorgt, der von dem Kundenstandort-Gerät (14, 30) empfangen wird, wobei das Kundenstandort-Gerät mit dem Modul (22) über die drahtgebundene Signalverbindung (17) verbunden ist,
**dadurch gekennzeichnet, dass**
die Zentralstelleneinrichtung (30) oder eine mit der Zentralstelleneinrichtung (30) verbundene Einrichtung eine Verarbeitungseinheit (32) zur Durchführung einer Virtualisierung von Netzwerkfunktion enthält, die ausgewählt ist aus einer Gruppe, bestehend aus Modulation und Demodulation von elektrischen Signalen in ein Format, das direkt mit dem Kundenstandort-Gerät (14) kompatibel ist, Übersprechunterdrückung oder Vektorisierung, sowie Fehlerkodierung, und wobei jedes Modul (22) so konfiguriert ist, dass unter normalen Betriebsbedingungen die von dem Kundenstandort-Gerät (14) übertragene elektrische Leistung durch die drahtgebundene Signalverbindung (17) ausreicht, um das mit dem Kundenstandort-Gerät (14) verbundene Modul (22) zu betreiben.

2. Die Netzwerkarchitektur nach Anspruch 1, wobei der Verteilerpunkt (20) ohne eine digitale Verarbeitung der übertragenen Daten arbeitet.

3. Die Netzwerkarchitektur nach Anspruch 1 oder 2, wobei die Virtualisierung der Netzwerkfunktion so beschaffen ist, dass die von der Zentralstelleneinrichtung (30) zum Verteilerpunkt (20) übertragenen Signale optische Repräsentationen der elektrischen Signale sind, die von dem Kundenstandort-Gerät (14) gelesen werden können.

4. Die Netzwerkarchitektur nach einem der Ansprüche 1 bis 3, wobei die Zentralstelleneinrichtung (30) so konfiguriert ist, dass sie Signale in ein Format formatiert oder moduliert, das nach der (Rück-)Umwandlung in elektrische Signale direkt durch das Modem oder den Router dem Kundenstandort-Gerät (14) verarbeitet werden kann.

5. Die Netzwerkarchitektur nach einem der Ansprüche 1 bis 4, wobei der Wellenlängenmultiplexer (21) ein passiver optischer Multiplexer ist.

6. Die Netzwerkarchitektur nach einem der Ansprüche 1 bis 5, wobei der Verteilerpunkt (20) so ausgelegt ist, dass er unabhängig von einem dedizierten Stromanschluss an ein elektrisches Stromnetz arbeitet.

7. Die Netzwerkarchitektur nach einem der Ansprüche 1 bis 6, wobei jedes Modul (22) frei von Anschlüssen ist, die dazu bestimmt sind, elektrische Energie an den optischen Teil (21) und/oder ein anderes Modul (22) zu übertragen, um es oder sie mit elektrischer Energie für seinen oder ihren Betrieb zu versorgen.

8. Die Netzwerkarchitektur nach einem der Ansprüche 1 bis 7, wobei der Wellenlängenmultiplexer ein dichter Wellenlängenmultiplexer mit einer Kanaltrennung von 100GHz oder weniger ist.

9. Die Netzwerkarchitektur nach einem der Ansprüche 1 bis 8, wobei der Wellenlängenmultiplexer ein zyklischer dichter Wellenlängenmultiplexer ist, wobei der optische Sender (Tx) in jedem Modul (22) so ausgelegt ist, dass er auf einer Trägerwellenlänge von λi +/nΔλ sendet, wobei λi die Trägerwellenlänge des optischen Kanals des Moduls (22) ist und nΔλ ein Vielfaches des freien Spektralbereichs des zyklischen Wellenlängenmultiplexers ist.

10. Die Netzwerkarchitektur nach einem der Ansprüche 1 bis 9, wobei der Verteilerpunkt als optischer De-/Multiplexer und als opto-elektrischer Wandler ohne zusätzlichen Modulator oder Kodierer konfiguriert ist, so dass ein nachgeschaltetes elektrisches Signal, das in optischer und gemultiplexter Form am optischen Port (131) empfangen wird, nach Demultiplexen und opto-elektrischer Wandlung innerhalb des Verteilerpunkts (20) im Wesentlichen im gleichen Format moduliert und/oder kodiert wird wie das nachgeschaltete elektrische Signal, das am elektrischen Anschluss an das Kundenstandort-Gerät (14) übertragen wird, wobei das Format vorzugsweise ein DSL Format ist.

11. Die Netzwerkarchitektur nach einem der Ansprüche 1 bis 10, wobei der Verteilerpunkt weiter optische Sender (Tx) umfasst, die in der Lage sind, die Wellenlänge durch ein Wellenlängen-Seeding zu sperren.

12. Die Netzwerkarchitektur nach einem der Ansprüche 1 bis 11, wobei der der Verteilerpunkt für Vollduplex-Signalübertragungen über digitale Teilnehmerleitungen (DSL) konfiguriert ist.

13. Die Netzwerkarchitektur nach einem der Ansprüche 1 bis 12, wobei die Module (22) identisch aufgebaut sind, wobei jedes Modul (22) einen Konfigurator zur Auswahl einer Betriebswellenlänge oder -frequenz des Moduls aufweist, wobei die Module (22) so konfiguriert sind, dass sie unterschiedliche Wellenlängen aufweisen.

14. Die Netzwerkarchitektur nach einem der Ansprüche 1 bis 13, die die weiters (zumindest zeitweise) eine Wellenlängen-Seeding-Vorrichtung (40) im optischen Pfad von der Zentralstelleneinrichtung (30) zum Verteilerpunkt (20) umfasst.

## Revendications

1. Architecture de réseau pour un service de type ligne d'abonné numérique (DSL) entre un équipement situé chez le client (14) et un équipement de central téléphonique (30), l'architecture de réseau comprenant un équipement de central téléphonique (30) et un point de distribution (20), dans laquelle le point de distribution (20) comprend
une partie optique (21) dotée d'un port optique (131) pour la connexion au réseau amont via une fibre optique (16) et d'un multiplexeur à division de longueur d'onde (21) ; et
une pluralité de modules électro-optiques (22), dans laquelle chaque module (22) est connecté par un port de signal optique (221) à un canal optique différent du multiplexeur à division de longueur d'onde (21) et est configuré pour être connecté par un port de signal électrique à une connexion de signal filaire (17) vers un équipement chez l'abonné (14), chaque module (22) comprenant en outre un récepteur optique (Rx) et un émetteur optique (Tx) ainsi qu'une unité d'alimentation électrique (224) configurée pour alimenter le module (22), y compris l'unité d'alimentation électrique (224), par de l'énergie électrique provenant de l'équipement des locaux du client (14, 30) connecté au module (22) via la connexion de signal filaire (17)
**caractérisé en ce que**
l'équipement du central téléphonique (30) ou un équipement relié à l'équipement du central téléphonique (30) comprend une unité de traitement (32) pour exécuter une virtualisation de fonction réseau choisie parmi un groupe comprenant la modulation et la démodulation de signaux électriques dans un format directement compatible avec l'équipement des locaux du client (14), la suppression de diaphonie ou la vectorisation, et le codage d'erreurs, et dans lequel chaque module (22) est configuré de telle sorte que, dans des conditions de fonctionnement normales, l'énergie électrique transmise depuis l'équipement des locaux du client (14) via la connexion de signal filaire (17) est suffisante pour faire fonctionner le module (22) connecté à l'équipement des locaux du client (14).

2. Architecture de réseau selon la revendication 1, dans laquelle le point de distribution (20) fonctionne sans traitement numérique des données transmises.

3. Architecture de réseau selon la revendication 1 ou 2, dans laquelle la virtualisation de fonction réseau est telle que les signaux transférés depuis l'équipement du central téléphonique (30) vers le point de distribution (10) sont des représentations optiques des signaux électriques lisibles par l'équipement des locaux du client (14).

4. Architecture de réseau selon l'une des revendications 1 à 3, dans laquelle l'équipement du central téléphonique (30) est configuré pour formater ou moduler des signaux dans un format pouvant être traité après avoir été (re)converti en signaux électriques directement par le modem ou le routeur de l'équipement des locaux du client (14).

5. Architecture de réseau selon l'une des revendications 1 à 4, dans laquelle le multiplexeur à division de longueur d'onde (21) est un multiplexeur optique passif.

6. Architecture de réseau selon l'une des revendications 1 à 5, dans laquelle le point de distribution (20) est adapté pour fonctionner indépendamment d'une connexion électrique dédiée à un réseau électrique.

7. Architecture de réseau selon l'une des revendications 1 à 6, dans laquelle chaque module (22) est dépourvu de connexions destinées à transférer de l'énergie électrique vers la partie optique (21) et/ou un autre module (22) afin de lui ou leur fournir l'énergie électrique nécessaire à son ou leur fonctionnement.

8. Architecture de réseau selon l'une des revendications 1 à 7, dans laquelle le multiplexeur à division de longueur d'onde est un multiplexeur à division de longueur d'onde dense avec un séparation de canaux de 100 GHz ou moins.

9. Architecture de réseau selon l'une des revendications 1 à 8, dans laquelle le WDM est un multiplexeur à division de longueur d'onde à densité cyclique, dans laquelle, de préférence, l'émetteur optique (Tx) de chaque module (22) est adapté pour émettre sur une longueur d'onde porteuse de λi +/- nΔλ, λi étant la longueur d'onde porteuse du canal optique du module (22) et nΔλ étant un multiple de la plage spectrale libre du multiplexeur à division de longueur d'onde cyclique.

10. Architecture de réseau selon l'une des revendications 1 à 8, dans laquelle le point de distribution est configuré comme un démultiplexeur/multiplexeur optique et comme un convertisseur opto-électrique convertisseur sans modulateur ni codeur supplémentaire, de sorte qu'un signal électrique en aval reçu sous forme optique et multiplexée au niveau du port optique (131) soit, après démultiplexage et conversion opto-électrique au sein du point de distribution (20), modulé et/ou codé essentiellement dans le même format que le signal en aval transmis au port électrique vers l'équipement du client (14), le format étant de préférence un format DSL.

11. Architecture de réseau selon l'une des revendications 1 à 10, dans laquelle le point de distribution comprend en outre des émetteurs optiques (Tx) capables d'un verrouillage de longueur d'onde par le biais d'une alimentation de longueur d'onde.

12. Architecture de réseau selon l'une des revendications 1 à 11, dans laquelle le point de distribution est configuré pour des transmissions de signaux de ligne d'abonné numérique (DSL) en duplex intégral.

13. Architecture de réseau selon l'une des revendications 1 à 12, dans laquelle les modules (22) sont conçus de manière identique, chaque module (22) comprenant un configurateur pour sélectionner une longueur d'onde ou une fréquence de fonctionnement du module, dans laquelle les modules (22) sont configurés de manière à avoir des longueurs d'onde différentes.

14. Architecture de réseau selon l'une des revendications 1 à 13, comprenant en outre (au moins temporairement) un dispositif de réglage de longueur d'onde (40) dans le chemin optique entre l'équipement du central téléphonique (30) et le point de distribution (20).
